# EUROPEAN PATENT APPLICATION

(11) **EP 4 094 905 A1**
(43) Date of publication of application: **30.11.2022**
(21) Application number: 22171155.9
(22) Date of filing: 02.05.2022
(51) Int. Cl.: B25J 13/08, B25J 19/02, B25J 5/00

(54) **SYSTEM AND METHOD FOR POSITIONING AND ANCHORING A MOUNTING BRACKET IN A CAST-IN CHANNEL**

(30) Priority: 26.05.2021 IT 202100013691
(71) Applicant: Yanmar Holdings Co., Ltd., Osaka-shi, Osaka (JP)
(72) Inventor: Argiolas, Alfredo, Firenze (IT); Niccolini, Marta, Firenze (IT); Pencelli, Manuel, Firenze (IT); Morita, Satoru, Osaka-shi (JP)
(74) Representative: Dennemeyer & Associates S.A.

(57) **Abstract**

System (1) for positioning and anchoring an object (2), preferably a general-purpose mounting bracket, into an opening (3), preferably a cast-in channel, of a floor (4), the system (1) comprising a mobile manipulator (5) having at least an arm (6), the mobile manipulator (5) being movable on said floor (4); at least an end-effector (7) connected to the arm (6) of the mobile manipulator (5) for directly acting on the object; and a robotic total station (8) placed remotely and separated from the mobile manipulator (5) for tracking and guiding the movements of said mobile manipulator (5), wherein the end-effector (7) comprises an optical element (9), preferably an optical prism, coupled with the robotic total station (8) for continuously tracking the position of the end-effector (7).

## Description

The present disclosure relates to a system and a method for positioning and anchoring an object, such as a mounting bracket, in an opening, such as a cast-in channel of a floor.

Building facades are usually composed by large glass panels (namely "cells" or "units") that are placed all around the buildings floor as external closure mainly for skyscrapers and residential houses. Curtain wall cells are non-structural elements that are only utilized to keep internal weather conditions for the building occupants. In order to ensure a perfect insulation from the environment, the cells must be precisely positioned along the building borders in order to avoid air/water leakages, thermal losses, aesthetic imperfections. Additional rubber gaskets are placed all around the cells to increase the building insulation. In order to ensure a proper glass panel positioning, metal brackets are placed in the building floor, thus working as support for the cells. These metal brackets are currently anchored to metal slabs (namely slab facade anchorage) with T-shaped bolts placed in the building floor while the concrete is pouring. For this reason, another technical name of these anchoring channels is "cast-in channel".

Metal brackets for curtain wall installation are currently placed along the building's floors perimeter according to the geometry of the facade. This operation is always performed by skilled operators that work very close to the building border in order to precisely place the brackets, following building construction drawings, plans and installation guidelines. This means that the operators have to accomplish this task utilizing traditional measuring and fastening tools, always working in a risky environment. Furthermore, bracket positioning is a repetitive task, costly and time consuming. Therefore, human operation is not always the best solution since not always precise, especially when working in risky conditions, as requested from the application.

For this reason, robotic systems are employed in place of human operators for positioning and fixing the metal brackets close to the building borders. For example, cable driven robots for curtain wall installation are described in prior art. Although such robots avoid risky situations for human operators, multiple tools are needed to perform the task, thus increasing the overall system complexity. Also, structural steel wires can be found while drilling, thus causing additional issues. Furthermore, the robot is not suitable for installing the metal brackets into cast-in channels and the positioning precision after installation is very limited.

Other solutions are present in prior art. However, the main limitations in using a robotic system are that the environment is unstructured and the working area can be very crowded by operators. This can be a huge hindrance for the movement of the robot. Also, the traditional brackets and tools are specifically designed for human hands and a precision below +/- 2mm is required for bracket positioning.

Examples of the present disclosure seek to address or at least alleviate the above problems.

In a first aspect, there is provided a system for positioning and anchoring an object, preferably a general-purpose mounting bracket, into an opening, preferably a cast-in channel, of a floor. The system comprises a mobile manipulator having at least an arm, the mobile manipulator being movable on said floor; at least an end-effector connected to the arm of the mobile manipulator for directly acting on the object; and a robotic total station placed remotely and separated from the mobile manipulator for tracking and guiding the movements of said mobile manipulator. In particular, the end-effector comprises an optical element, preferably an optical prism, coupled with the robotic total station for continuously tracking the position of the end-effector.

In a second aspect, there is provided a method for positioning and anchoring a mounting bracket into an opening, preferably a cast-in channel, of a floor using the system according to the first aspect. The method comprises:
retrieving information from a Building Information Modeling, BIM, and moving the mobile manipulator and/or the arm based on said retrieved information;
positioning the end-effector over the opening, scanning the opening for checking the match with a Building Information Model, BIM, and determining structural features of said opening;
extracting and recording said structural features of the opening and sending an alert message if the opening does not match the BIM;
positioning the end-effector over the mounting bracket;
scanning the mounting bracket for determining position, orientation and structural features of said mounting bracket, and extracting and recording said position, orientation and structural features of the mounting bracket;
aligning the end-effector relative to mounting bracket, grasping the mounting bracket, and positioning said mounting bracket over the opening;
aligning the end-effector relative to the opening, releasing the mounting bracket, and anchoring the mounting bracket into the opening of the floor; and
obtaining information regarding the placement of the mounting bracket and checking the presence of discrepancies between BIM and the real environment.

In a third aspect, there is provided a computer program comprising computer readable instructions which, when implemented on a computer, causes the computer to carry out a method according to the second aspect.

In a fourth aspect, there is provided a storage medium comprising the computer program according to the third aspect.

Other aspects and features are defined in the appended claims.

Examples of the disclosure may avoid risky situations for human operators that currently are positioning the brackets close to the building border; increase the accuracy of the bracket positioning, decrease the bracket positioning time, automatize the installation process, and check in advance the status of the cast-in channel and send an alert if something is not as planned.

Examples of the disclosure will now be described by way of example only with reference to the accompanying drawings, in which like references refer to like parts, and in which:
Figures 1A-C are schematic representations of the components of a standard mounting bracket and the use of this bracket for mounting glass panels on a building facade;
Figure 2 is a schematic representation of the system according to the present disclosure;
Figures 3A-B are block diagrams of the system according to two examples of the present disclosure;
Figures 4A-B are representations of a mobile manipulator according to two examples;
Figures 5A-5B are schematic representations of the end-effector according to an example;
Figures 6A-6B are schematic representations of the vision module according to an example;
Figures 7A-7B are scan views of the cast-in channel and bracket according to an example;
Figures 8A-8B are schematic representations of the grasping module according to an example;
Figures 9A-9B are schematic representations of the anti-slippage rotating module and a detail of rotating means according to an example;
Figures 10A-10D are schematic representations of the anti-slippage process according to an example;
Figure 11 is a schematic representation of the fastening module according to an example;
Figures 12A-12B are schematic representations of the end-effector degrees of freedom and possible adjustment of the bracket according to an example;
Figure 13 is a flow chart of the method according to an example;
Figure 14 is a computer system for implementing the method according to an example; and
Figure 15 is a schematic representation of the heading calibration function according to an example.

A system and a method for positioning and anchoring an object in an opening of a floor are disclosed. In the following description, a number of specific details are presented in order to provide a thorough understanding of the examples of the disclosure. It will be apparent however to a person skilled in the art that these specific details need not be employed in order to practice the examples of the disclosure. Conversely, specific details known to the person skilled in the art are omitted for the purposes of clarity in presenting the examples.

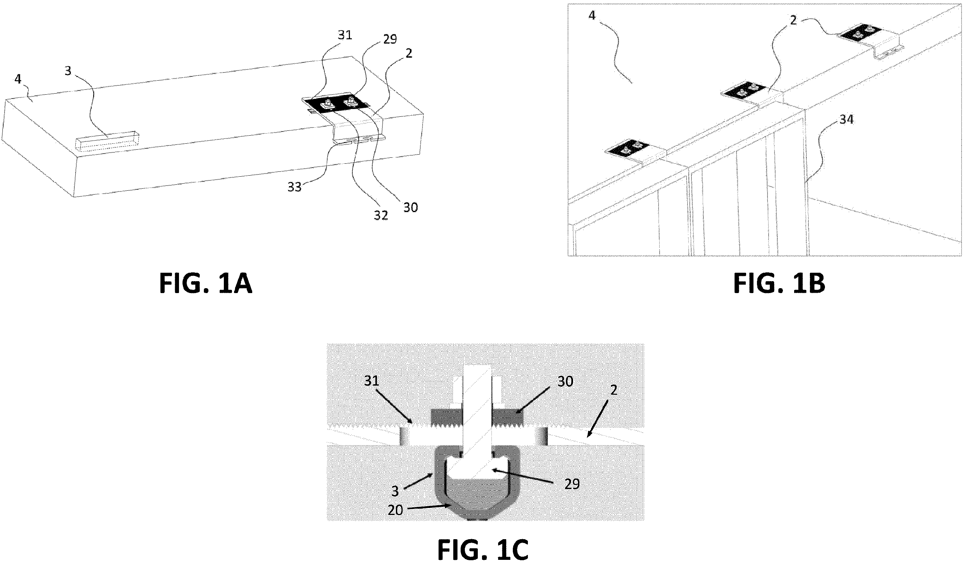

Figures 1A-C illustrate a standard mounting bracket 2 anchored in an opening 3 of a floor 4 of a building for mounting glass panels 34 covering building facades as external closure mainly for skyscrapers and residential houses. As shown in figures 1A and 1B, the mounting bracket 2 has a step-like shape and is positioned at the edge of the floor 4 of a building. The mounting bracket 2 is anchored to the floor 4 by inserting and fixing suitable anchoring means inside a longitudinal opening 3 or cast-in channel located at the border of the floor 4. The anchoring means basically comprise T-shaped bolts 29 and anti-slippage plates 30 to secure the mounting bracket 2 to the cast-in channel, as shown in detail in figure 1C. Also, a metal slab anchorage 20 is present in the cast-in channel 3 for fastening the bracket 2 on the floor. In particular, the mounting bracket 2 can be made of a metal material, such as aluminum or stainless steel having an anti-slippage surface 31 properly machined and shaped. A surface of the anti-slippage pates 30 is also properly machined to cooperate with the anti-slippage surface 31 of the mounting bracket 2 to avoid bracket slipping. The head of the T-shaped bolts 29 can be inserted in the cast-in channel 3 (in the metal slab 20) and suitably rotated to block the head in the channel 3. The anti-slippage surface 31 of the mounting bracket 2 is provided with a slot 32 for each T-shaped bolt 29 to allow adjustment movements of the bracket 2 along the slot 32 direction. Also, a peripheral region of the bracket 2 is provided with T-shaped holes 33 for hanging the glass panels 34.

The installation of brackets 2 performed by human operators can be summarized according to the following steps:
i. T-bolts 29 and anti-slippage plates 30 are mounted together in the bracket 2;
ii. The operator preliminary checks if the metal slab 20 is placed correctly. If the metal slab 20 is properly placed, the bracket 2 can be installed. If the metal slab 20 is not properly placed, the bracket 2 cannot be immediately placed and a correction action is required (thus causing several delays and issues);
iii. A survey engineer draws reference lines and checks points on the building floor 4 by means of a Robotic Total Station (RTS), laser levels and other traditional tools;
iv. The bracket 2 is placed in a preliminary position with T-bolts 29 inserted in the metal slab 20;
v. The bracket 2 final position is set according to the building model by means of scales, robotic total stations and laser levels and using as a reference the glass panels 34 previously placed on the underlying floor 4;
vi. Once the bracket 2 is placed in its final position, the two anti-slippage plates 30 are rotated thus engaging the machined surface 31 of the bracket 2;
vii. The bolts 29 are fastened with the proper torque, according to mechanical specifications;
viii. A final check is required to ensure that the bracket 2 is properly installed.

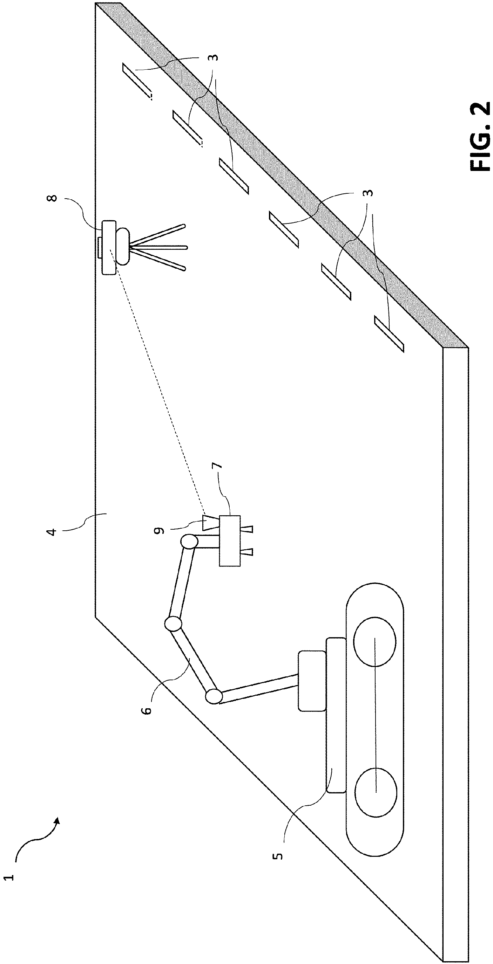

Figure 2 illustrates a system 1 according to an example for positioning and anchoring a mounting bracket 2 the borders of a floor 4 of a building. It is noted that the system 1 can be used for positioning and anchoring other objects 2 different from the standard mounting brackets. In other words, the application of the system 1 is not limited to standard mounting brackets 2 but can also be used for mounting brackets of different shapes and dimension as well as for mounting completely different types of objects. According to the example of figure 2, the system 1 is configured to fix mounting brackets 2 into cast-in channels 3 located at the edge of the floor 4, as also shown in figure 1A. The system 1 comprises a mobile manipulator 5 that can move on the floor 4. As an example, the mobile manipulator 5 can be a motorized machine having an arm 6. The arm 6 can be advantageously an articulated arm. However, not articulated arms can also be considered suitable for the purposes of the present invention. The system 1 also comprises an end-effector 7 connected to one end of the arm 6 of the mobile manipulator 5. The end-effector 7 can directly act on the mounting bracket 2. In particular, the end-effector 7 is used to check the region where to place the bracket 2 (e.g. the cast-in channel 3), to grasp the bracket 2, to correctly position the bracket 2 at the cast-in channel 3 and to anchor the bracket 2 to the floor 4 at the cast-in channel 3. In order to track and guide the movement of the mobile manipulator, the system 1 furthermore comprises a robotic total station (RTS) 8 that is located remotely and separated from the mobile manipulator 5. In particular, the robotic total station 8 is coupled with an optical element 9 present on the end-effector 7 for continuously tracking the position of the end-effector 7.

The RTS 8 can be used as vision feedback for the precise positioning of the end effector 7 (thus also for the mobile manipulator 5, while retrieving the information from robot kinematics and robot joint positions from encoders). Coupled with the Robotic Total Station 8, an optical prism 9 can be integrated in the end-effector 7. The optical prism 9 is continuously tracked by the RTS 8 that also records the position of the prism 9 and send them back to the robot control unit for position feedback.

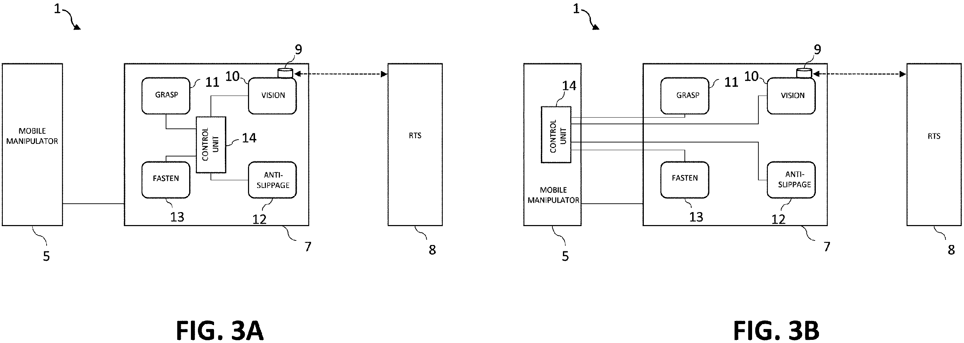

A more detailed description of the system 1 is shown in figures 3A and 3B. These figures illustrate a block diagram of the system 1 according to two different examples. From the figures results that the end-effector 7 is directly connected to the mobile manipulator 5 and that is remotely coupled to the robotic total station 8 (dashed doubled arrow). The coupling occurs through the optical element 9. The system 1, and in particular the end-effector 7, comprises at least one of the following four modules: a vision module 10, a grasping module 11, an anti-slippage rotating module 12 and a fastening module 13. Each of these modules is connected to a control unit 14. According to one example (Fig. 3A), the control unit 14 is located in the end-effector 7. According to another example (Fig. 3B), the control unit 14 located outside the end-effector 7, for instance in the mobile manipulator 5. The vision module 10 comprises a vision sensor 19 for scanning an object (i.e. the mounting bracket 2 or the cast-in channel 3) and reconstructing a 3D image of this object. The grasping module 11 comprises a grasping tool for grasping and releasing an object (i.e. the mounting bracket 2) and the anti-slippage rotating module 12 comprises an anti-slippage rotating mechanism for securing an object (i.e. the mounting bracket 2) after rotating a component (i.e. the anti-slippage plate 30) of said object. Also, the fastening module 13 comprises a fastening tool for locking an object (i.e. the T-bolt 29).

In one example, the control unit 14 is configured to obtain information from a Building Information Modeling, BIM and to send to the mobile manipulator 5 a set of instructions to move the mobile manipulator 5 in a real environment matching the BIM.

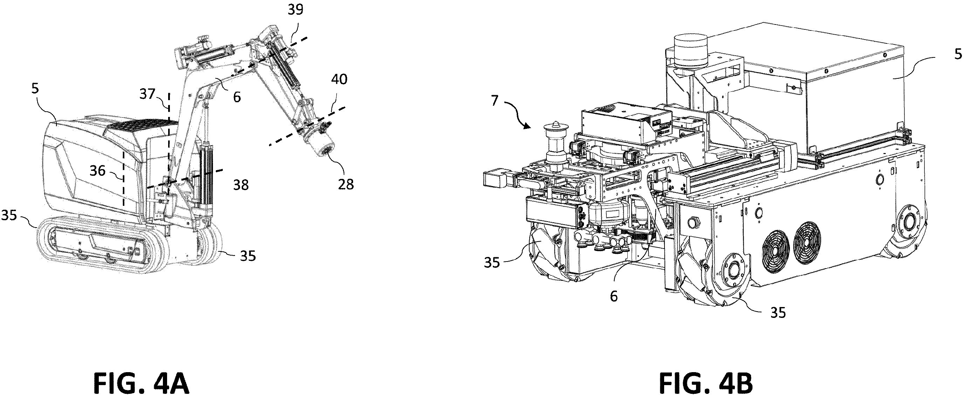

Figure 4A and 4B illustrate two different examples of a mobile manipulator 5. According to one example (Fig. 4A), the mobile manipulator 5 can be a motorized robot system moving on traction motors 35. The mobile manipulator 5 comprises an articulated arm 6 mounted on a main body or mobile platform. The articulated arm 6 is provided with a plurality of electric joints, e.g. four linear and two rotational joints. As shown in Fig. 4A, the manipulator 5 comprises a first joint (swing) 36, a second joint (boom swing) 37, a third joint (boom) 38, a fourth joint (arm) 39, a fifth joint (linear end-effector) 40 and a sixth joint (rotational end-effector) 28. The rotating joint 28 is located between the arm 6 of the mobile manipulator 5 and the end-effector 7 and can be used for providing a rotational movement of the end-effector 7 relative to the arm 6 of the mobile manipulator 5.

The mobile manipulator 5 can feature different kinematics. According to Fig. 4A example, the mobile manipulator (5) can have kinematics similar to the one of traditional excavators. However, additional and specific features can be considered, such as a remote operation with specific control based on Inverse Kinematics for easier control and operations, autonomous or semi-autonomous operations, full electric power train and actuation in order to make it suitable for indoor and noiseless applications, high precision joints with almost zero backlash for higher accuracy and repeatability, additional rotational joints for tool orientation and custom control algorithm. The mobile manipulator can have a custom battery pack for the power supply and two electric motors for two continuous rubber tracks 35. Specific encoders can be provided for the position of the joints. Also, current sensors, torque sensors and vision sensors can be present to assist the manipulator 5 in the installation task. The total weight of the manipulator can be about 750 Kg and the arm 6 can have a maximum length of about 2.15 m with a payload of about 50 Kg.

According to another example (Fig. 4B), the mobile manipulator 5 can be similar to a vehicle such as a truck. This configuration is more compact compared to that of Fig. 4A and can increase the stability of the mobile manipulator 5 when moving in unconstructed environment and when operating close to the edge of the floor 4 for the mounting task. Figure 4B shows also the presence of the end-effector 7 mounted on the arm 6. Differently from the manipulator of Figure 4A, the arm 6 is not articulated. Accordingly, the arm 6 is not provided with the plurality of joints as mentioned above. However, at least the linear and the rotating joint of the end-effector 7 are still present. In particular, a rotating joint 28 can be located between the arm 6 of the mobile manipulator 5 and the end-effector 7 and can be used for providing a rotational movement of the end-effector 7 relative to the arm 6 of the mobile manipulator 5.

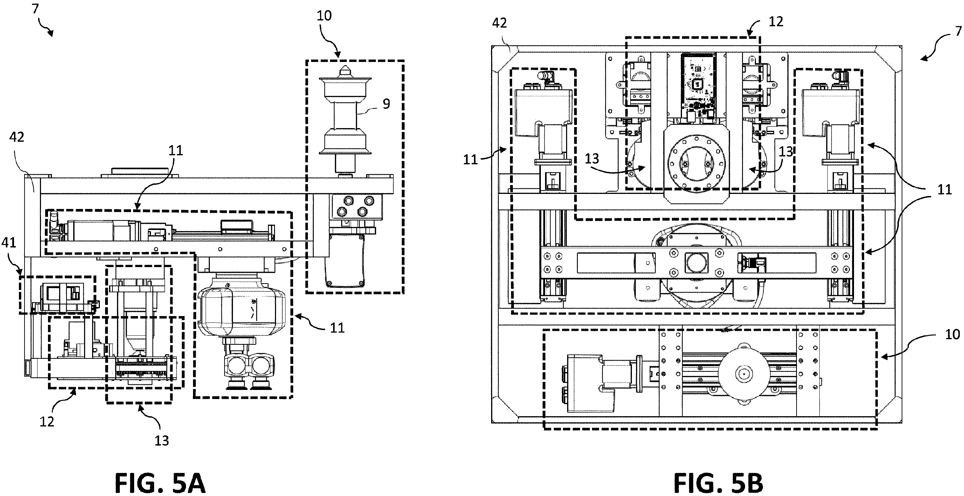

Figures 5A and 5B illustrate the end-effector 7 in a side view (Fig. 5A) and in a top view (Fig. 5B). In particular, the figures show how the vision module 10, the grasping module 11, the anti-slippage rotating module 12 and the fastening module 13 are located relative to each other. The different modules of end-effector 7 are advantageously mounted on a frame structure 42 allowing the independent movement or sliding of the single modules along longitudinal axes defined by the frame structure 42. It is noted that the vision module 10 is basically mounted on the upper side of the frame 42 so that the optical element 9, for example the optical prism, can be easily detected by the robotic total station 8. The grasping module 11 is basically mounted on the lower side of the frame 42 and extends symmetrically with two parallel arms and a central element including a grasping mechanism facing downwards. Due to their characteristics, the anti-slippage rotating module 12 and the fastening module 13 are basically mounted on the lower side of the frame 42 and are interconnected. In particular, fastening tools of the fastening module 13 can be moved through the anti-slippage rotating module 12. In order to power and control the components of the different modules, the end-effector 7 can also comprise a module for electronics 41 that is connected to each of the other modules. In particular, module for electronics 41 can comprise at least a microcontroller, two Electronic Speed Controllers (ESC) and ACDC converters.

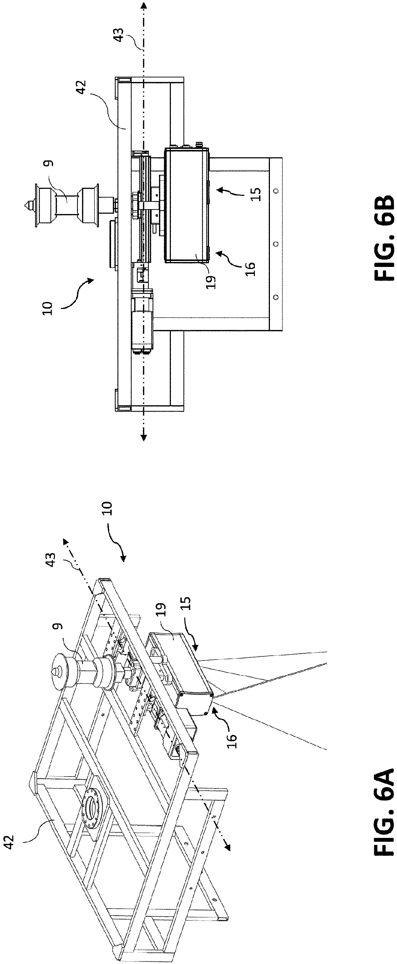

Figures 6A and 6B illustrate the details of the vision module 10 mounted on the frame 42 in a perspective view (Fig. 6A) and in a side view (Fig. 6B). The vision sensor 19 in the vision module 10 comprises an optical sensor 15 and a profilometer 16 coupled to the optical sensor 15. Preferably, the optical sensor 15 can be a 3D camera and the profilometer 16 can be a laser profilometer. In particular, the optical sensor 15 and the profilometer 16 can be embedded in the vision sensor 19.

Advantageously, the vision sensor 19 can be independently movable along a first linear axis 43 of the end-effector 7, meaning that the vision sensor 19 can move along the first linear axis 43, for example sliding on a rail structure on the frame 42, independently from the movement of the end-effector 7 and thus from the other modules of the end-effector 7.

Once provided with an encoder feedback, the vision sensor 19 is able to reconstruct the 3D image of the scene according to its own motion. In particular, the vision sensor 19 can be trained to retrieve information about shapes position and orientation, shape distances and planes inclination, according to the target task. With the purpose of fixing a mounting bracket 2, the vision sensor 19 can be used to recognize the position and orientation of the cast-in channel 3, to check the cast-in channel 3 status, to properly find the features of the bracket 2 (i.e. bolts, holes, plates, etc.), and to finally check the installation of the bracket 2.

In one example, the optical element 9 can be positioned on the vision sensor 19. In this way, when the vision sensor 19 moves along the first linear axis 43, the optical element 9 can follow the same movement. According to this configuration, the entire vision module 10 can be independently movable along the first linear axis 43 of the end-effector 7.

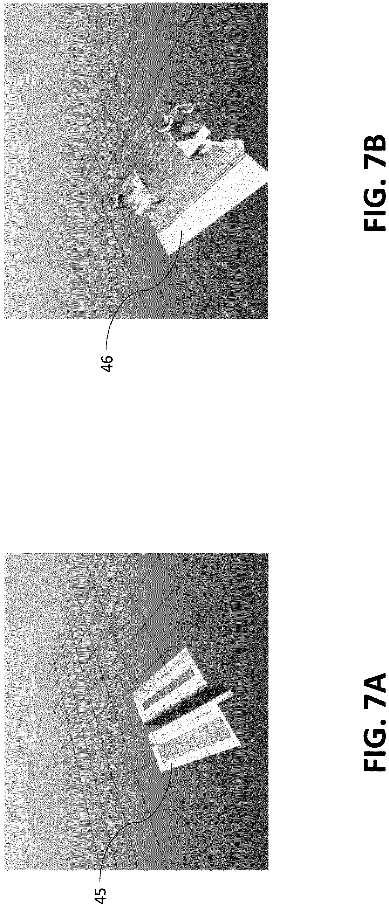

Figures 7A and 7B show examples of a scan image 45 of a cast-in channel 3 (Fig. 7A) and of a scan image 46 of a mounting bracket 2 (Fig. 7B) with highlighted planes, edges and distance and shapes and axial bolts distance, respectively.

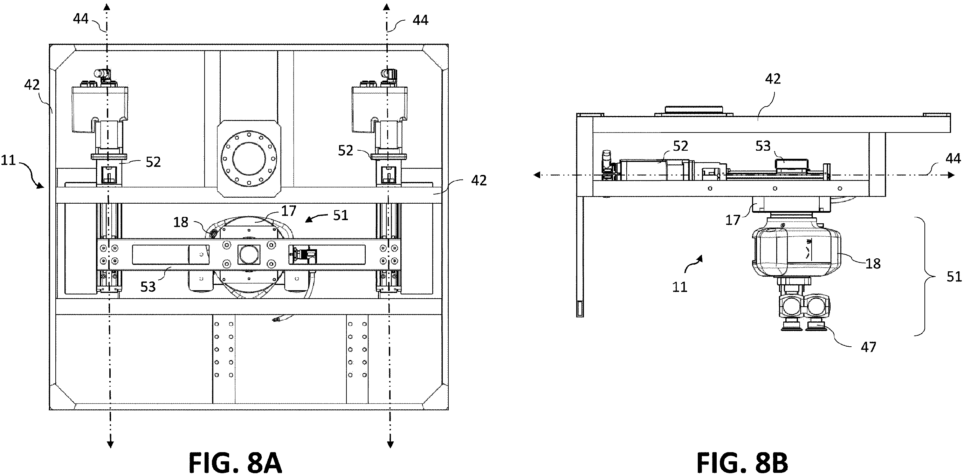

Figures 8A and 8B illustrate the details of the grasping module 11 mounted on the frame 42 in a top view (Fig. 8A) and in a side view (Fig. 8B). In order to grasp an object, i.e. the mounting bracket 2, the grasping module 11 comprises a grasping tool 51. In one example, the grasping tool 51 comprises a vacuum assembly 18. The vacuum assembly 18 is connected to one or more suction cups 47 to adhere to the object to be grasped.

Alternatively, or in addition, the grasping tool 51 can comprise an electromagnet assembly and/or gripper elements.

In one example, the grasping module 11 can comprise a load cell 17 for measuring a force exerted by the grasping tool 51. The load cell 17 serves to avoid exceeding force thresholds and to gently place the object (e.g. the mounting bracket 2) to the building floor 4 without damaging the end-effector 7.

Advantageously, the grasping module 11 can be independently movable along at least a second linear axis 44 of the end-effector 7. As shown in the figures, the grasping tool 51 is located at the center of the frame 42 and is connected to two parallel longitudinal arms 52 through a transversal rod 53 sliding on rail structures along the second linear axis 44.

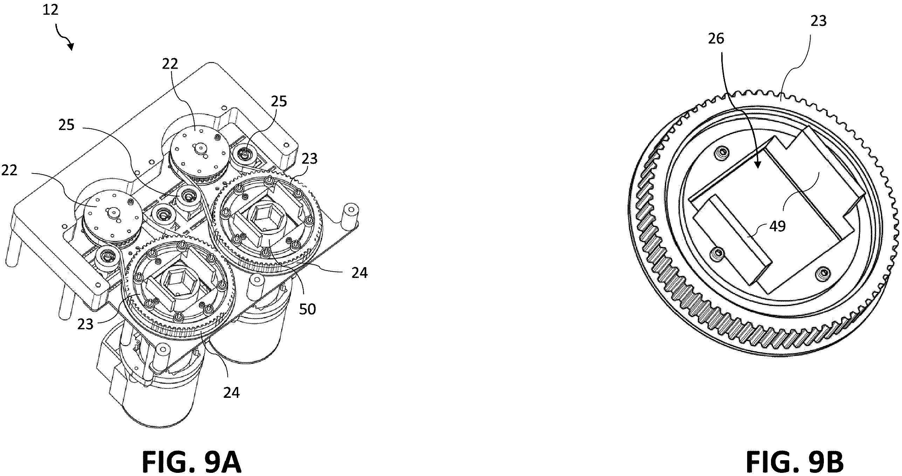

In one example, to avoid a slipping action after fastening the object, the system 1 comprises an anti-slippage rotating module 12 with an anti-slippage rotating mechanism. This mechanism comprises rotating means with protruding engaging elements configured for engaging a component to be rotated. This is illustrated in figures 9A and 9B. In particular, the anti-slippage rotating mechanism of the anti-slippage rotating module 12 can comprise at least one servo motor 21 (not shown in the figure), one first toothed wheel 22, one second toothed wheel 23, and one timing belt 24. The servo motor 21 is configured to drive the second toothed wheel 23 through the coupling with the first toothed wheel 22 and the timing belt 24, wherein the second toothed wheel 23 is configured to be engageable with a component to be rotated. For this purpose, the second toothed wheel 23 preferably comprises a central aperture 26 and protruding rims 49 at edges of the central aperture 26 for engaging the component to be rotated. The central aperture 26 can have any suitable shape or contour. Preferably, the central aperture 26 has a polygonal shape. Also, the anti-slippage rotating mechanism of the anti-slippage rotating module 12 can comprise a tensioning system 25 for providing tension to the timing belt 24. According to the example of figure 9A, the anti-slippage rotating mechanism comprises two separated servo motors 21, two first toothed wheels 22, two second toothed wheels 23, and two timing belt 24 connected to each other as mentioned above. The central aperture 26 has a square or rectangular shape in order to engage or fit the square or rectangular anti-slippage plates 30 of the mounting bracket 2 as shown in figure 1A.

To decrease the friction, the anti-slippage rotating module 12 can comprise one or more rollers and bearings.

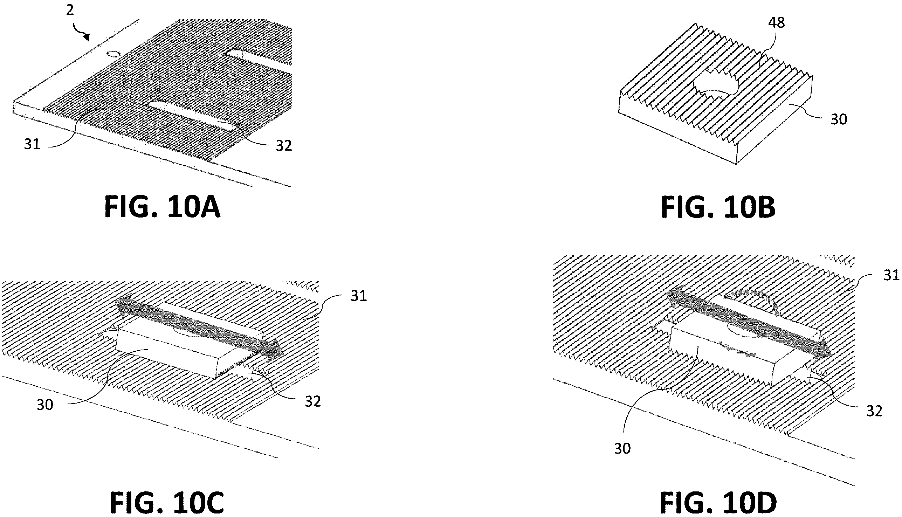

The functioning of the anti-slippage mechanism is better clarified in the figures 10A to 10D. Figure 10A shows a detail of the mounting bracket 2. It is noted that the bracket 2 comprises an anti-slippage surface or machined surface 31 covering at least a portion of the upper side of the bracket 2. In particular, the machined surface 31 is located at the two slots 32 where the T bolts 29 together with the anti-slippage plate 30 are inserted (e.g. as in Fig. 1A). Figure 10B shows on the other hand a detail of the anti-slippage plate 30 in a bottom view. It is noted that the lower surface of the anti-slippage plate 30 is completely provided with a machined surface 48. Both the anti-slippage surfaces 31, 48 of the bracket 2 and the anti-slippage plate 30 are machined to cooperate with each other such that when the anti-slippage plate 30 is positioned in contact with the bracket 2, i.e. when the two corresponding anti-slippage surfaces 31, 48 are in contact, the plate 30 can move in only one direction and is blocked in all other directions. In other words, the machined surface 31 of the bracket 2 can perfectly match the machined surface 48 of the plate 30 once properly oriented. The anti-slippage surfaces 31, 48 of the bracket 2 and the anti-slippage plate 30 can be knurled surfaces with longitudinal ridges.

As shown in figures 10C and 10D, the anti-slippage plate 30 can be coupled with the portion of the bracket 2 with the machined surface 31 according to the designed geometry. In the unlocked configuration (Fig. 10C), the anti-slippage machined surfaces 31, 48 do not match thus allowing the fine positioning of the bracket 2. In the locked configuration (Fig. 10D), the plate 30 is rotated 90 degrees along its own main axis and the anti-slippage machined surfaces 31, 48 completely match, thereby allowing the fastening of the bracket 2.

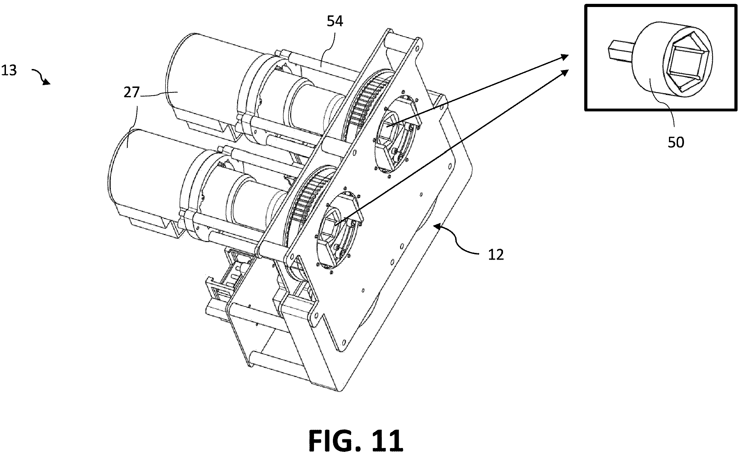

Figure 11 illustrates a perspective view of the fastening tool 54 of the fastening module 13. In one example, the fastening tool 54 comprises at least a high torque wrench mechanism 27 connected to a wrench element 50. The wrench element 50 preferably has a polygonal shape. The high torque wrench mechanism 27 can be pneumatic, hydraulic, or electric.

In particular, the fastening module 13 can be coupled to the anti-slippage rotating module 12 such that the wrench element 50 of the high torque wrench mechanism 27 is located inside an aperture provided in the anti-slippage rotating module 12, wherein preferably the aperture is provided in a rotating means of the anti-slippage rotating module 12.

In order to properly fasten the T-shaped bolts 29 once the bracket 2 is correctly placed according for example to the BIM model, two separate high torque wrenches 27 can be used, thus ensuring the proper locking torque, according to mechanical specifications. The wrench element 50 can have a specific design (i.e. a hexagonal shape) to match the bolts 29, taking into consideration specific geometrical tolerances.

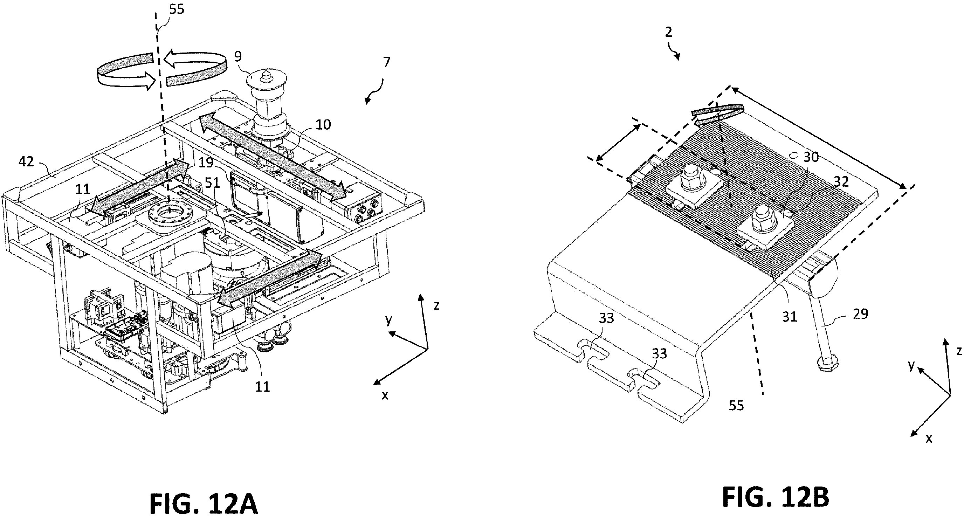

Figures 12A and 12B show degrees of freedom of the end-effector 7 (Fig. 12A) and how these can affect the position movements of the mounting bracket 2 (Fig. 12B). As shown in Fig. 12A, the end-effector 7 features two additional degrees of freedom to properly adjust each tool position with respect to the end-effector 7 main rotation axis 55. One degree of freedom is for the vision sensor 19 of the vision module 10, along the Y axis of the end-effector 7. The other degree of freedom is for the grasping tool 51 of the grasping module 11 along the X axis of the end-effector 7. The end-effector 7 can rotate around the main rotation axis 55 around the Z axis. This rotational movement is provided by a joint of the mobile manipulator 5, such as the rotating joint 28 of Fig. 4A. The additional degrees of freedom are obtained by means of three (one for the vision sensor 19 and two for the grasping tool 51) linear axis (shown in the figure with double arrows).

Thanks to the additional degrees of freedom of the end-effector 7, the position of the mounting bracket 2 can be properly adjusted after inserting the T-bolts 29 in the cast-in channel 3, as shown in Fig. 12B.

Referring back to figures 6B and 8B, in one example, the vision module 10 can be independently movable along a first linear axis 43 of the end-effector 7 and the grasping module 11 is independently movable along at least a second linear axis 44 of the end-effector 7, wherein the first linear axis 43 is orthogonal to the second linear axis 44.

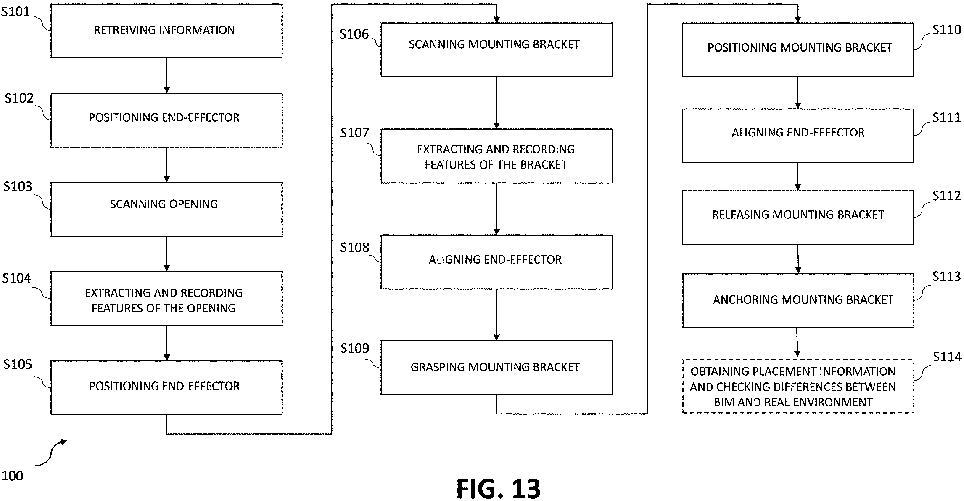

The flow chart illustrated in figure 13 describes a method 100 for positioning and anchoring a mounting bracket 2 into a cast-in channel 3 of a floor 4 using the system 1 described above.

At step S101, information from a Building Information Modeling, BIM, are retrieved and the mobile manipulator 5 and/or the arm 6 are moved based on said retrieved information in order to reach the target position. The task targets can be stored in the control unit 14. The RTS 8 continuously track the end-effector 7 through the coupling with the optical element 9. At step S102, the end-effector 7 is positioned on the opening 3 and the opening 3 is scanned (step S103) for checking the match with the Building Information Model, BIM, and structural features of the opening 3 are determined. At step S104, the determined structural features of the opening 3 are extracted and recorded. In case the opening 3 does not match the BIM, an alert message is sent.

At step S105, the end-effector 7 is positioned on the mounting bracket 2 and at step S106 the mounting bracket 2 is scanned for determining position, orientation and structural features of the mounting bracket 2. The position, orientation and structural features of the mounting bracket 2 are then extracted and recorded at step S107.

At step S108, the end-effector 7 is aligned relative to mounting bracket 2, the mounting bracket 2 is grasped (step S109), and the mounting bracket 2 is positioned on the opening 3 at step S110, eventually moving the mobile manipulator 5 and/or the arm 6. It is noted that the grasping is carried out using the checking function of the load cell 17. The end-effector 7 is aligned at step S111 relative to the opening 3, the mounting bracket 2 is released (step S112), and the mounting bracket 2 is anchored into the opening 3 of the floor 4 at step S113 by activating the wrench element 50 of the fastening module 13. A fine alignment of the bracket 2 occurs through an end-effector 7 alignment along the Z axis and grasping tool 51 alignment along the X axis.

At step S114 (optional) information are obtained regarding the placement of the mounting bracket 2 and the presence of discrepancies between BIM and the real environment is checked.

After the fastening of the mounting bracket 2, the method 100 can return back to step S101 for starting a new task.

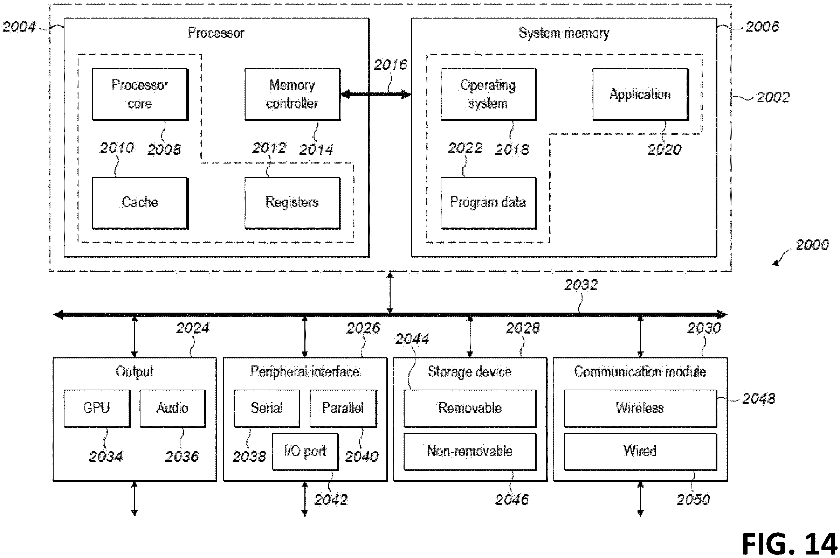

Figure 14 schematically shows a computer system for implementing methods of examples of the disclosure. In particular, Figure 14 shows an example of a computing device 2000 for example which may be arranged to implement one or more of the examples of the methods described herein. In examples, the computing device 2000 comprises main unit 2002. The main unit 2002 may comprise a processor 2004 and a system memory 2006. In examples, the processor 2004 may comprise a processor core 2008, a cache 2010, and one or more registers 2012. In examples, the processor core 2008 may comprise one or more processing cores and may comprise a plurality of cores which may run a plurality of threads. The processor 2004 may be of any suitable type such as microcontroller, microprocessor, digital signal processor or a combination of these, although it will be appreciated that other types of processor may be used.

In examples, the processor core 2008 may comprise one or more processing units. In examples, the processor core 2008 comprises one or more of a floating point unit, an arithmetic unit, a digital signal processing unit, or a combination of these and/or plurality of other processing units, although it will be appreciated that other processing units could be used. In examples, the cache 2010 may comprise a plurality of caches such as a level one cache and a level two cache, although other appropriate cache arrangements could be used.

In examples, the processor 2004 comprises a memory controller 2014 operable to allow communication between the processor 2004 and the system memory 2006 via a memory bus 2016. The memory controller 2014 may be implemented as an integral part of the processor 2004, or it may be implemented as separate component.

In examples, the system memory 2006 may be of any suitable type such as non-volatile memory (e.g. flash memory or read only memory), volatile memory (such as random access memory (RAM)), and/or a combination of volatile and non-volatile memory. In examples, the system memory 2006 may be arranged to store code for execution by the processor 2004 and/or data related to the execution. For example, the system memory may store operating system code 2018, application code 2020, and program data 2022. In examples, the application code 2020 may comprise code to implement one or more of the example methods described herein, for examples to implement the steps described above with reference to Figure 13. The application code 2020 may be arranged to cooperate with the program data 2022 or other media, for example to allow retrieving information from a BIM, positioning the end-effector 7, for grasping and anchoring the mounting bracket 2 and for checking the presence of discrepancies between BIM and real environment.

In examples, the computing device 2000 may have additional features, functionality or interfaces. For example main unit 2002 may cooperate with one or more peripheral devices for example to implement the methods described herein. In examples, the computing device 2000 comprises, as peripheral devices, an output interface 2024, a peripheral interface 2026, a storage device 2028, and a communication module 2030. In examples, the computing device comprises an interface bus 2032 arranged to facilitate communication between the main unit 2002 and the peripheral devices.

In examples, the output device 2024 may comprise output devices such as a graphical processing unit (GPU) 2034 and audio output unit 2036 for example arranged to be able to communicate with external devices such as a display, and/or loudspeaker, via one or more suitable ports such as audio/video (A/V) port. In examples, the peripheral interface 2026 may comprise a serial interface 2038, a parallel interface 2040, and an input/output port(s) 2042 which may be operable to cooperate with the main unit 2002 to allow communication with one or more external input and/or output devices via the I/O port 2042. For example, the I/O port 2042 may communicate with one or more input devices such as a keyboard, mouse, touch pad, voice input device, scanner, imaging capturing device, video camera, and the like, and/or with one or more output devices such as a 2D printer (e.g. paper printer), or 3D printer, or other suitable output device. For example, signals may be received via the I/O port 2042 and/or the communication module 2030. In examples, the storage device may comprise removable storage media 2044 and/or non-removable storage media 2046. For example, the removable storage media may be random access memory (RAM), electrically erasable programmable read only memory (EEPROM), read only memory (ROM) flash memory, or other memory technology, optical storage media such as compact disc (CD) digital versatile disc (DVD) or other optical storage media, magnetic storage media such as floppy disc, magnetic tape, or other magnetic storage media. However, it will be appreciated that any suitable type of removable storage media could be used. Non-removable storage media 2046 may comprise a magnetic storage media such as a hard disk drive, or solid state hard drive, or other suitable media, although it will be appreciated that any suitable non-removable storage media could be used. The storage device 2028 may allow access by the main unit 2002 for example to implement the methods described herein.

In examples, the communication module may comprise a wireless communication module 2048 and a wired communication module 2050. For example, the wireless communication module may be arranged to communicate wirelessly via a suitable wireless communication standard for example relating to Wi-Fi, Bluetooth, near field communication, optical communication (such as infrared), acoustic communication, or via a suitable mobile telecommunications standard. The wired communication module may allow communication via a wired or optical link for example by Ethernet or optical cable. However, it will be appreciated that any suitable communication module could be used.

Referring to Figures 3, 5Aand 5B, the vision module 10, the grasping module 11, the anti-slippage rotating module 12 and the fastening module 13 may for example be implemented by the control unit 14. In examples, one or more of the vision module 10, the grasping module 11, the anti-slippage rotating module 12 and the fastening module 13 may be implemented by the main unit 2002, although it will be appreciated that other suitable implementations could be used. In examples, these modules may be implemented by the main unit 2002 in cooperation with the output device 2024, although it will be appreciated that other suitable implementations could be used.

It will be appreciated that in examples of the disclosure, elements of the disclosed methods may be implemented in a computing device in any suitable manner. For example, a conventional computing device may be adapted to perform one or more of the methods described herein by programming/adapting one or more processors of the computing device. As such, in examples, the programming/adapting may be implemented in the form of a computer program product comprising computer implementable instructions stored on a data carrier and/or carried by a signal bearing medium, such as floppy disk, hard disk, optical disk, solid state drive, flash memory, programmable read only memory (PROM), random access memory (RAM), or any combination of these or other storage media or signal bearing medium, or transmitted via a network such as a wireless network, Ethernet, the internet, or any other combination of these or other networks.

In other words, in examples, a computer program may comprise computer readable instructions which, when implemented on a computing device, cause the computing device to carry out a method according examples of the disclosure. In examples, a storage medium may comprise the computer program, for example, as mentioned above. It will also be appreciated that other suitable computer architectures could be used such as those based on one or more parallel processors. Furthermore, at least some processing may be implemented on one or more graphical processing units (GPUs). Although computing device 2000 is described as a general purpose computing device, it will be appreciated that this could be implemented in any appropriate device, such as mobile phone, smart phone, camera, video camera, tablet device, server device, with modifications and/or adaptation if appropriate to the features described above, for example dependent on the desired functionality and hardware features.

In one additional example, the system 1 can further comprise a mapping sensor for mapping the environment. Preferably, the mapping sensor is a 2D/3D LIDAR sensor or a camera. In this way, the system 1 can perform a scan of the environment in order to get a set of information about the real scenario. The output of the scan could be represented by a 3D point cloud that can be used both for navigation and/or inspection. In this last case, the acquired data can be used before the robot operation (for checking if the real environment is exactly what expected from the BIM) and/or after the robot performed its task (object positioning) in order to check if the object manipulation has been properly executed, according to the project specifications.

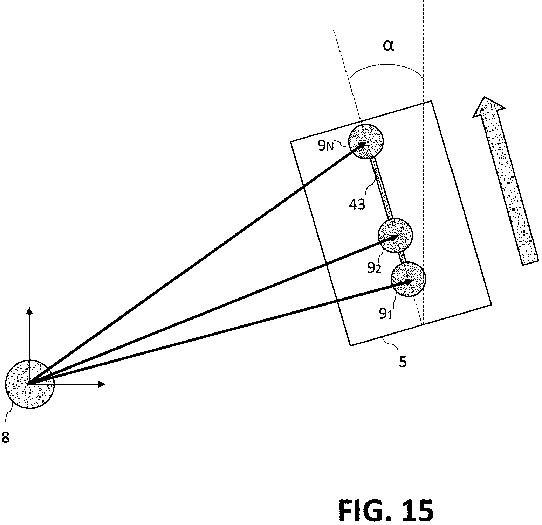

Figure 15 illustrates an additional function of the system 1, i.e. a heading calibration function. Thanks to this function it is possible to get a precise information about the orientation of mobile manipulator 5 (heading) with respect to the real environment. For this purpose, the optical element 9 (optical prism) is installed on a motorized linear axis 43. The position of the optical prism 9 is directly measured with respect to the robotic total station 8 when the mobile manipulator 5 is stopped and the motorized linear axis 43 is moving. After performing geometrical calculation, it is possible to get information about the mobile manipulator 5 heading. Figure 15 shows several positions of the optical prism 9₁, 9₂, 9_{N} measured by the RTS 8 along the linear axis 43 and the estimated heading angle α.

Although a variety of techniques and examples of such techniques have been described herein, these are provided by way of example only and many variations and modifications on such examples will be apparent to the skilled person and fall within the spirit and scope of the present invention, which is defined by the appended claims and their equivalents.

### Reference Signs

- 1: System
- 2: Mounting bracket
- 3: Opening/Cast-in channel
- 4: Floor
- 5: Mobile manipulator
- 6: Arm
- 7: End-effector
- 8: Robotic Total Station (RTS)
- 9: Optical element/Optical prism
- 10: Vision module
- 11: Grasping module
- 12: Anti-slippage rotating module
- 13: Fastening module
- 14: Control unit
- 15: 3D camera
- 16: Laser profilometer
- 17: Load cell
- 18: Vacuum assembly
- 19: Vision sensor
- 20: Metal slab
- 21: Servo motor
- 22: First toothed wheel
- 23: Second toothed wheel
- 24: Timing belt
- 25: Tensioning system
- 26: Central aperture
- 27: High torque wrench mechanism
- 28: Rotating joint
- 29: T-bolt
- 30: Anti-slippage plate
- 31: Anti-slippage surface
- 32: Slot
- 33: T-shaped hole
- 34: Glass panel
- 35: Traction motor/Wheel
- 36: First joint (swing)
- 37: Second joint (boom/swing)
- 38: Third joint (boom)
- 39: Fourth joint (arm)
- 40: Fifth joint (end-effector)
- 41: Electronics
- 42: Frame structure
- 43: First linear axis
- 44: Second linear axis
- 45: 3D image of a cast-in channel
- 46: 3D image of a mounting bracket
- 47: Suction cup
- 48: Machined surface of the plate
- 49: Protruding rim
- 50: Wrench element
- 51: Grasping tool
- 52: Longitudinal arm
- 53: Transversal rod
- 54: Fastening tool
- 55: Main rotational axis
- 100: Method
- 2000: Computing device
- 2002: Main unit
- 2004: Processor
- 2006: System memory
- 2008: Processor core
- 2010: Cache
- 2012: Register
- 2014: Memory controller
- 2016: Memory bus
- 2018: Operating system code
- 2020: Application code
- 2022: Program data
- 2024: Output interface
- 2026: Peripheral interface
- 2028: Storage device
- 2030: Communication module
- 2032: Interface bus
- 2034: Graphical processing unit
- 2036: Audio output unit
- 2038: Serial interface
- 2040: Parallel interface
- 2042: Input/output port
- 2044: Removable storage media
- 2046: Non-removable storage media
- 2048: Wireless communication module
- 2050: Wired communication module

## Claims

1. System (1) for positioning and anchoring an object (2), preferably a general-purpose mounting bracket, into an opening (3), preferably a cast-in channel, of a floor (4), the system (1) comprising:
a mobile manipulator (5) having at least an arm (6), the mobile manipulator (5) being movable on said floor (4);
at least an end-effector (7) connected to the arm (6) of the mobile manipulator (5) for directly acting on the object; and
a robotic total station (8) placed remotely and separated from the mobile manipulator (5) for tracking and guiding the movements of said mobile manipulator (5),
wherein the end-effector (7) comprises an optical element (9), preferably an optical prism, coupled with the robotic total station (8) for continuously tracking the position of the end-effector (7).

2. System (1) according to claim 1, wherein
a. the end-effector (7) comprises at least one of:
i. a vision module (10) comprising a vision sensor (19) for scanning an object and reconstructing a 3D image of said object;
ii. a grasping module (11) comprising a grasping tool (51) for grasping and releasing an object;
iii. an anti-slippage rotating module (12) comprising an anti-slippage rotating mechanism for securing an object after rotating a component of said object; and
iv. a fastening module (13) comprising a fastening tool (54) for locking an object; and
b. the system (1) further comprises a control unit (14) connected to any one of the vision module (10), grasping module (11), anti-slippage rotating module (12), and fastening module (13).

3. System (1) according to claim 2, wherein
a. the vision sensor (19) comprises an optical sensor (15), preferably a 3D camera, and a profilometer (16), preferably a laser profilometer, coupled to said optical sensor (15), and/or
b. the vision sensor (19) is independently movable along a first linear axis (43) of the end-effector (7); and/or
c. the optical element (9) is positioned on the vision sensor (19).

4. System (1) according to any one of the claims 2 to 3, wherein
a. the grasping module (11) comprises a load cell (17) for measuring a force exerted by the grasping tool (51); and/or
b. the grasping tool (51) comprises a vacuum assembly (18) and/or an electromagnet assembly and/or gripper elements; and/or
c. the grasping module (11) is independently movable along at least a second linear axis (44) of the end-effector (7).

5. System (1) according to any one of the claims 2 to 4, wherein
a. the anti-slippage rotating mechanism of the anti-slippage rotating module (12) comprises rotating means with protruding engaging elements configured for engaging a component to be rotated; and/or
b. the anti-slippage rotating mechanism of the anti-slippage rotating module (12) comprises at least one servo motor (21), one first toothed wheel (22), one second toothed wheel (23), and one timing belt (24), wherein the servo motor (21) is configured to drive the second toothed wheel (23) through the coupling with the first toothed wheel (22) and the timing belt (24), the second toothed wheel (23) being configured to be engageable with a component to be rotated, wherein preferably the second toothed wheel (23) comprises a central aperture (26) and protruding rims (49) at edges of said central aperture (26) for engaging the component to be rotated, wherein preferably the central aperture (26) has a polygonal shape; and
c. the anti-slippage rotating mechanism of the anti-slippage rotating module (12) further comprises a tensioning system (25) for providing tension to the timing belt (24).

6. System (1) according to any one of the claims 2 to 5, wherein the vision module (10) is independently movable along a first linear axis (43) of the end-effector (7), the grasping module (11) is independently movable along at least a second linear axis (44) of the end-effector (7) and wherein the first linear axis (43) is orthogonal to the second linear axis (44).

7. System (1) according to any one of the claims 2 to 6, wherein
a. the fastening tool (54) of the fastening module (13) comprises at least a high torque wrench mechanism (27) connected to a wrench element (50), wherein preferably the wrench element (50) has a polygonal shape and wherein preferably the high torque wrench mechanism (27) is pneumatic, hydraulic, or electric, and
b. the fastening module (13) is coupled to the anti-slippage rotating module (12) such that the wrench element (50) of the high torque wrench mechanism (27) is located inside an aperture provided in the anti-slippage rotating module (12), wherein preferably the aperture is provided in a rotating means of the anti-slippage rotating module (12).

8. System (1) according to any one of the preceding claims, wherein the control unit (14) is configured to obtain information from a Building Information Modelling, BIM and to send to the mobile manipulator (5) a set of instructions to move the mobile manipulator (5) in a real environment matching the BIM.

9. System (1) according to any one of the preceding claims, further comprising a rotating joint (28) located between the arm (6) of the mobile manipulator (5) and the end-effector (7) for providing a rotational movement of the end-effector (7) relative to the arm (6) of the mobile manipulator (5).

10. System (1) according to any one of the preceding claims, further comprising a mapping sensor for mapping the environment, wherein preferably the mapping sensor is a 2D/3D LIDAR sensor.

11. Method (100) for positioning and anchoring a mounting bracket (2) into an opening (3), preferably a cast-in channel, of a floor (4) using the system (1) according to any of the preceding claims, the method (100) comprising:
retrieving (S101) information from a Building Information Modelling, BIM, and moving the mobile manipulator (5) and/or the arm (6) based on said retrieved information;
positioning (S102) the end-effector (7) over the opening (3), scanning (S103)the opening (3) for checking the match with a Building Information Model, BIM, and determining structural features of said opening (3), extracting and recording (S104) said structural features of the opening (3) and sending an alert message if the opening (3) does not match the BIM;
positioning (S105) the end-effector (7) over the mounting bracket (2), scanning (S106) the mounting bracket (2) for determining position, orientation and structural features of said mounting bracket (2), and extracting and recording (S107) said position, orientation and structural features of the mounting bracket (2);
aligning (S108) the end-effector (7) relative to mounting bracket (2), grasping (S109) the mounting bracket (2), and positioning (S110) said mounting bracket (2) over the opening (3);
aligning (S111) the end-effector (7) relative to the opening (3), releasing (S112) the mounting bracket (2), and anchoring (S113) the mounting bracket (2) into the opening (3) of the floor (4); and
obtaining information regarding the placement of the mounting bracket (2) and checking (S114) the presence of discrepancies between BIM and the real environment.

12. A computer program comprising computer readable instructions which, when implemented on a computer, causes the computer to carry out a method according to claim 11.

13. A storage medium comprising the computer program according to claim 12.
